# EUROPÄISCHE PATENTSCHRIFT

(11) **EP 1 627 084 B1**
(45) Veröffentlichungstag und Bekanntmachung des Hinweises auf die Patenterteilung: **09.10.2019**
(21) Anmeldenummer: 04731853.0
(22) Anmeldetag: 10.05.2004
(51) Int. Cl.: C21B 3/06, C22B 7/04, C21B 11/10, C21B 13/12, C21C 5/56, C22B 5/10

(54) **VERFAHREN ZUM VERWERTEN VON SCHLACKE**
METHOD FOR UTILIZING SLAG
PROCEDE DE RECUPERATION DE SCORIES

(30) Priorität: 16.05.2003 AT 7532003
(43) Veröffentlichungstag der Anmeldung: 22.02.2006
(73) Patentinhaber: Primetals Technologies Austria GmbH, 4031 Linz (AT)
(72) Erfinder: FLEISCHANDERL, Alexander, 4655 Grünau (AT); GENNARI, Udo, 4202 Hellmonsödt (AT)
(74) Vertreter: Metals@Linz
(86) Internationale Anmeldenummer: PCT/AT2004/000161
(87) Internationale Veröffentlichungsnummer: WO 2004/101828

(56) Entgegenhaltungen:
- WO-A-00/01852
- WO-A-00/75385
- WO-A-96/34989

## Beschreibung

Die Erfindung betrifft ein Verfahren zum Verwerten von aus der Eisenhüttenindustrie stammender und oxidische Eisenteilchen enthaltender im Stahlwerkskonvertern anfallender Schlacke unter Zugabe eines Reduktionsmittels und Reduktion oxidischer Eisenteilchen der Schlacke sowie gegebenenfalls vorhandener anderer Metalloxide mit diesem Reduktionsmittel sowie eine Anlage zur Durchführung des Verfahrens.

Verfahren zum Aufbereiten von Schlacken aus der Eisenhüttenindustrie haben das Ziel, umweltverträgliche Schlacken zu bilden, die insbesondere wirtschaftlich verwertbar sind, beispielsweise als Rohmaterial für die Herstellung von Zementklinkerersatz eingesetzt werden können.

Verfahren dieser Art sind beispielsweise aus der WO0075385, WO 96/24696 oder der WO 97/46717 bekannt. Hierbei werden eisenoxidhältige, flüssige Schlacken, wie z.B. Stahlwerkschlacke, mit Eisenoxidträgern, wie z.B. Eisenerzen, basischen Schwacherzen, Walzwerkszunder oder Hüttenstäuben und Kalk vermischt und die gebildete Ferritschlacke in einem Reduktionsreaktor unter Ausbildung eines Eisenbades und einer Sinterphase unter Verbrennung von Kohlenstoff reduziert, bzw. wird Heißluft eingeblasen.

Nachteilig bei diesen bekannten Verfahren ist die hohe Abgasmenge und der hohe Staubverlust, der sich beim Einblasen der Reststoffe und der Kohle von unten durch das Bad ergibt. Darüber hinaus ist nachteilig, dass der Wärmeverlust, der durch den endothermen Reduktionsvorgang beim Reduzieren der Eisenoxidteilchen der Schlacke bedingt ist, chemisch oder durch Heißwind wettgemacht wird, und zwar chemisch durch Verbrennen von Kohlenstoff. Diese Maßnahmen verursachen hohe Turbulenzen und damit auch hohe Kohlenstoffverluste aufgrund des höheren Staubgehaltes und der höheren Abgasmenge. Das chemische Aufheizen durch Verbrennung von Kohlenstoff beeinflusst die chemischen Gleichgewichte und damit den Verfahrensablauf beim Behandeln der Schlacke. Die dabei unvermeidlich entstehenden hohen CO₂-Emissionen sind angesichts der demnächst fällig werdenden CO₂-Abgaben ein wirtschaftlicher Nachteil und entsprechen nicht dem Trend zu nachhaltigen Prozessen. Zudem erfolgt die Schlackenverwertung in Konvertern oder ortsfesten Reduktionsreaktoren aufwendiger Bauart, sodass hohe Investitionskosten erforderlich sind.

Ein weiterer Nachteil der bekannten Verfahren ist darin zu sehen, dass der Betrieb diskontinuierlich erfolgt, d.h. es wird zu behandelnde Schlacke chargiert, fertig behandelt und sodann abgegossen bzw. abgestochen. Dies bedingt für jede Schlackencharge heftige Reaktionen verbunden mit einer wesentlichen Änderung der chemischen Zusammensetzungen der im Reaktorgefäß befindlichen Phasen, was wiederum eine hohe Belastung der feuerfesten Auskleidung der Reaktionsgefäße, also der Konverter oder ortsfesten Reduktionsreaktoren, bedingt. Diese hohe Belastung ist zusätzlich noch verstärkt durch das oben erwähnte chemische Heizen.

Die Erfindung bezweckt die Vermeidung dieser Nachteile und Schwierigkeiten und stellt sich die Aufgabe, ein Verfahren der eingangs erwähnten Art und eine Anlage zur Durchführung des Verfahrens zu schaffen, welche mit einfachen Mitteln das Auslangen finden, d.h. es sollen nur geringe Investitionskosten erforderlich sein. Weiters sollen Staubverluste möglichst vermieden werden und nur geringe Wartungs- und Reparaturarbeiten anfallen, d.h. es soll sich die chemische Zusammensetzung der im Reaktorgefäß befindlichen Phasen durch die Chargierung von Schlacken und Einblasung von Stäuben stetig und insgesamt nur geringfügig ändern. Ein weiterer wesentlicher Aspekt ist darin zu sehen, dass der bei der endothermen Reduktion stattfindende Wärmeverbrauch durch eine Wärmezufuhr ausgeglichen wird, die keine Änderung der chemischen Gleichgewichte bewirkt, sodass die Aufbereitung der Schlacke unbeeinflusst vom Wärmeeinbringen, d.h. der Energiezufuhr, stattfinden kann. Diese Art der Wärmezufuhr soll auch eine geringere CO₂-Emission bewirken als der beschriebene Stand der Technik, um die Vorteile einer CO₂-Einsparung bei der künftig fälligen CO₂-Steuer nutzen zu können. Die gegenüber dem Stand der Technik verringerte Abgasmenge führt auch zu geringerer Staubemission und damit effizienterer Nutzung der eingebrachten Materialien.

Diese Aufgabe wird erfindungsgemäß durch die Kombination folgender Merkmale gelöst:
- Chargieren der Schlacke in ein Reaktorgefäß, vorzugsweise in einen kippbaren Pfannenreaktor, auf eine Rest-Eisenschmelze, die gelösten Kohlenstoff enthält, langsam und kontinuierlich über einen längeren Zeitraum,
- elektrisches Aufheizen der Schlacke und der Rest-Eisenschmelze sowie sich neu bildender Eisenschmelze über einen längeren Zeitraum,
- Einblasen eines kohlenstoffhältigen Reduktionsmittels mit Gas, vorzugsweise mit Inertgas, über einen längeren Zeitraum mittels einer Lanze in einen Bereich nahe der Grenzfläche zwischen Schlacke und Eisenschmelze oder direkt in die Eisenschmelze, und zwar unter Lösen von Kohlenstoff in der Eisenschmelze und unter Vermischen von Eisenschmelze und Schlacke,
- Lösen des Kohlenstoffes des Reduktionsmittels in der Eisenschmelze und
- Reduktion von oxidischen Eisenteilchen der Schlacke unter Bildung von metallischem Eisen und CO über einen längeren Zeitraum,
- Bildung einer Schaumschlacke durch das entstehende CO über einen längeren Zeitraum,
- Einbringen eines sauerstoffhältigen Gases oder von Sauerstoff in die Schaumschlacke und Nachverbrennung von CO zu CO₂ über einen längeren Zeitraum, wobei das Einbrengen in der oberen Hälfte, vorzugsweise im obersten Drittel der Höhe der Schlacke (2'), durchgeführt wird.
- Bodenspülung des Reaktorgefäßes mit Inertgas über einen längeren Zeitraum,
- Ausbringen der aufbereiteten Schlacke und gegebenenfalls
- nachfolgend Ausbringen von Eisenschmelze unter Belassung einer gelösten Kohlenstoff enthaltenden Rest-Eisenschmelze im Reaktorgefäß, wobei sich längerer Zeitraum auf den Zeitraum im wesentlichen von einem Ausbringen von Schlacke sowie gegebenenfalls Eisenschmelze bis zum nachfolgenden Ausbringen von Schlacke bezieht.

Das Chargieren der flüssigen Schlacke ergibt sich aus der Anpassung an die Chargenzeiten der Stahlwerkskonverter (z.B. LD-Konverter oder AOD-Konverter bei Rostfrei-Stahlwerk) und der dabei produzierten Mengen flüssiger Schlacke. Die Aggregatgröße und Chargiergeschwindigkeit sind so abgestimmt, dass die in dem(den) Stahlwerkskonverter(n) anfallende(n) Schlackenmenge(n) in dem Zeitraum zwischen den Abstichen im erfindungsgemäßen Reduktionsreaktor behandelt werden kann (können). Dabei können auch die Schlackenmengen aus zwei oder mehr Konverterchargen gesammelt und dann kontinuierlich in den Reduktionsreaktor chargiert werden.

Infolge des Einbringens der Schlacke langsam und kontinuierlich über einen längeren Zeitraum gelangen je Zeiteinheit und bezogen auf die bereits vorliegende Menge relativ geringe Mengen an aufzubereitender Schlacke in das Reaktorgefäß, sodass sich die chemische Zusammensetzung der im Reaktorgefäß befindlichen Phasen nur gering ändert. Damit ist ein sozusagen "Quasi-kontinuierlicher" Betrieb gewährleistet, d.h. eine kontinuierliche Umsetzung der eingesetzten Stoffe, auch wenn das Ausbringen der aufbereiteten Schlacke diskontinuierlich stets spätestens dann erfolgt, wenn das maximale Fassungsvermögen des Reaktorgefäßes erreicht wird.

Durch das elektrische Aufheizen der kontinuierlich anwachsenden Schlackenmenge und der Resteisenschmelze sowie der sich neu bildenden Eisenschmelze über einen längeren Zeitraum ist ebenfalls eine "Quasi-Kontinuität" gewährleistet. Zudem werden die chemischen Reaktionen durch den Aufheizvorgang nicht beeinflusst. Dies bringt den Vorteil, dass die chemischen Reaktionen leichter überschaubar und leichter steuerbar sind, was sich auf die Qualität der ausgebrachten Produkte, also der aufbereiteten Schlacke und der aufbereiteten Eisenschmelze, vorteilhaft auswirkt.

Ein weiterer wesentlicher Vorteil ergibt sich durch das Einblasen des kohlenstoffhältigen Reduktionsmittels direkt in die Eisenschmelze bzw. in einen Bereich nahe der Grenzfläche zwischen Schlacke und Eisenschmelze, denn es kommt hierbei unweigerlich zu einem Lösen nahezu des gesamten eingeblasenen Kohlenstoffs in der Eisenschmelze und durch das aufsteigende Blasegas zu einem Vermischen von Eisenschmelze und Schlacke und somit zu einer optimal ablaufenden direkten Reduktion. Hierbei spielt der direkte Kontakt der kohlenstoffhältigen Metalltröpfchen mit der metalloxidhältigen Schlacke eine wesentliche Rolle, und zwar durch die hierbei gebildete große, für die Reduktion zur Verfügung stehende Phasengrenzfläche. Es kommt zur direkten Reduktion der reduzierbaren Metalloxide der Schlacke mit dem in der Metallschmelze gelösten Kohlenstoff.

Das Einbringen der Reduktionsmittel mit Hilfe einer Lanze ist ebenfalls von Bedeutung, zumal hierdurch eine optimale Regulationsmöglichkeit (Einstellung einer bestimmten Höhe) für den Prozess gegeben ist, und zwar im Unterschied zu Bodendüsen, denn diese würden die zugegebenen Mittel hinaufblasen, wodurch ein beträchtlicher Abgang dieser Mittel durch sogenanntes Durchblasen mit dem Einblasegas in den Abgasstrom und damit ein großer Staubanfall gegeben wäre. Auch wird durch Lanzen eine längere Verweilzeit der Reduktionsmittel im Metallbad und dadurch eine effizientere Lösung des Kohlenstoffs aus dem Reduktionsmittel im Metallbad erzielt.

Vorzugsweise lassen sich auch Reststoffe, insbesonders Hüttenreststoffe, wie Schrottplatzrückstände, eisenoxidhaltige Stäube und Schlämme aus Gasreinigungsprozessen, Zunder, etc., mit Gas, vorzugsweise mit Inertgas, mittels einer Lanze in einen Bereich nahe der Grenzfläche zwischen Schlacke und Eisenschmelze oder direkt in die Eisenschmelze, und zwar unter Vermischen von Eisenschmelze und Schlacke, langsam und kontinuierlich über einen längeren Zeitraum einblasen.

Dies gilt auch für das Einblasen von Hilfsstoffen, wie Bauxit, vorteilhaft Reststoffe der Bauxitgewinnung wie z.B. Rotschlamm und/oder Feinkalk und/oder Siliziumträger, vorteilhaft Si-hältige Reststoffe wie Flugaschen, Kesselaschen oder gebrauchte Gießereisande, die ebenfalls mittels Gas, vorzugsweise mit Inertgas, mittels einer Lanze in einen Bereich nahe der Grenzfläche zwischen Schlacke und Eisenschmelze oder direkt in die Eisenschmelze, und zwar jeweils unter Vermischen von Eisenschmelze und Schlacke, langsam und kontinuierlich über einen längeren Zeitraum eingeblasen werden.

Für die Behandlung der Schlacke kann es von Vorteil sein, wenn die Reststoffe und/oder Hilfsstoffe in einer anderen Höhe als das Reduktionsmittel in das Reaktorgefäß eingeblasen werden, vorzugsweise oberhalb des Einblasens der Reduktionsmittel, beispielsweise direkt in den Bereich der Grenzschicht zwischen Eisenschmelze und darüber sich bildender Schaumschlacke.

Gemäß einer bevorzugten Ausführungsform erfolgt das Einblasen eines kohlenstoffhältigen Reduktionsmittels und/oder von Reststoffen und/oder von Hilfsstoffen schräg gegen die Grenzfläche der im Reaktorgefäß befindlichen Eisenschmelze und der darüber befindlichen Schlacke.

Im erfindungsgemäßen Verfahren werden die über einen längeren Zeitraum durchzuführenden Verfahrensschritte im wesentlichen von einem Ausbringen von Schlacke sowie gegebenenfalls Eisenschmelze bis zum nachfolgenden Ausbringen von Schlacke und damit im wesentlichen zeitgleich durchgeführt.

Da der Anteil an mineralischen Materialien in den zu verarbeitenden Hüttenwerksreststoffen, vor allem Schlacken und Stäuben, höher ist als jener der reduzierbaren Metalloxide, ergibt sich eine Produktion von aufbereiteter Schlacke in wesentlich größerem Ausmaß als die Produktion aufbereiteter Eisenschmelze, sodass mehrmals hintereinander Schlacke ausgebracht und dann erst Eisenschmelze abgegossen wird. Erfolgen die über einen längeren Zeitraum durchzuführenden Verfahrenschritte jeweils über den Zeitraum zwischen zwei hintereinanderfolgenden Ausbringungen von Schlacke, gegebenenfalls nach dem Ausbringen von Eisenschmelze und nachfolgend von Schlacke, so können die aufzubereitenden Reststoffe, also vor allem Schlacken und Stäube, in den geringst möglichen Mengen pro Zeiteinheit, die kompatibel mit der Logistik des Stahlwerksbetriebes, also der pro Zeiteinheit produzierten und zu verarbeitenden flüssigen Schlacke ist, zugegeben werden. Es kann jedoch notwendig sein, das Einbringen von Schlacke und/oder das Einblasen von Reststoffen und/oder Reduktionsmitteln zeitweilig zu unterbrechen, beispielsweise um ein geleertes Schlackengefäß gegen ein volles auszutauschen oder um Zwischenproben zu nehmen oder eine Korrektur der Schlackenzusammensetzung durch ein vorrübergehend vermehrtes Einbringen von Hilfsstoffen durchzuführen, etc. Diese Unterbrechungen der Chargierung und der Einblasung, aber auch des elektrischen Heizens, sind nach dem erfindungsgemäßen Verfahren unabhängig voneinander möglich, sodass eine ideale Anpassung an die Erfordernisse während eines Zeitraumes zwischen zwei Schlackenabstichen möglich ist.

Zur Vermeidung des Durchblasens von Kohlenstoff in das Abgas bzw. einer Verbrennung von Kohlenstoff in der oxidativen Zone im oberen Bereich der Schaumschlacke wird vorzugsweise das Einblasen eines kohlenstoffhältigen Reduktionsmittels nur so lange durchgeführt, bis maximal die Sättigungsgrenze von Kohlenstoff in der Eisenschmelze erreicht wird.

Um eine effiziente und den Reduktionsprozess nicht beeinträchtigende Nachverbrennung eines Teils des bei der Reduktion entstehenden CO sicherzustellen, wird erfindungsgemäß das Einbringen eines sauerstoffhältigen Gases oder von Sauerstoff in die Schlacke in der oberen Hälfte, vorteilhafterweise im obersten Drittel der Höhe der Schlacke, durchgeführt.

Es hat sich als vorteilhaft erwiesen, wenn das Einblasen vor allem der Hilfsstoffe und/oder Reststoffe in einem Höhenbereich beiderseits der Grenzfläche zwischen Schlacke und Eisenschmelze erfolgt, der sich über maximal 25 % der Gesamthöhe der Schlacke bzw. einem gleichen Höhenbereich in der Eisenschmelze, vorzugsweise maximal 10 % der Gesamthöhe der Schlacke bzw. spiegelbildlich dazu in der Eisenschmelze, erstreckt.

Für eine besonders rasche Umsetzung der eingebrachten Stoffe werden diese zweckmäßig über Seitenaustrittsöffnungen der Lanze in etwa horizontaler Richtung oder leicht schräg gegen die idealisierte ebene Grenzfläche eingeblasen.

Vorzugsweise erfolgt das elektrische Aufheizen mittels Lichtbogen und/oder Widerstandsheizung, falls das Brennen eines Lichtbogens infolge der sich bildenden Schaumschlacke nicht möglich ist.

Vorzugsweise wird die Schlacke zumindest teilweise in flüssiger Form chargiert.

Es ist ein besonderes Verfahrensmerkmal darin zu sehen, dass die Reduktion der Metalloxide überwiegend über eine direkte Reduktion mit Hilfe des in der Metallschmelze gelösten Kohlenstoffs erfolgt und nicht extra CO-Gas über die Verbrennung von Kohlenstoff mit Sauerstoff erzeugt und verwendet wird.

Um schwer reduzierbare Verbindungen, wie beispielsweise MnO, Cr₂O₃, P₂O₅, auf entsprechend gewünschte tiefe Werte in der aufbereiteten Schlacke zu reduzieren, erfolgt ein Einsatz von gegenüber Kohlenstoff stärkerer Reduktionsmittel, wie Aluminium, Ferrosilizium, Calciumcarbid, etc., vorzugsweise in der Endphase der Reduktion vor einem Ausbringen der aufbereiteten Schlacke.

Um die Eigenschaften der aufbereiteten Schlacke noch zu konditionieren, erfolgt, falls notwendig, nach Abschluss der Zugabe von Reduktionsmitteln eine weitere Zugabe von Hilfsstoffen. Diese erfindungsgemäß mögliche, zeitlich unabhängige und kontrolliert vornehmbare Zugabe hat unter anderem den Vorteil, dass zunächst bei geringerer Basizität eine effektivere Reduktion von Oxiden, wie MnO oder P₂O₅, erfolgen kann, und erst anschließend die Schlackenzusammensetzung auf die gewünschte Basizität eingestellt wird. Das erfindungsgemäße Verfahren ermöglicht weiters das Einbringen eisenoxidhältiger Erze, wie Feinerze, Chromiterze, etc., vorteilhafterweise ebenfalls über eine Einblaslanze. Erfindungsgemäß soll sich eine Schaumschlacke mit möglichst großer Höhe bilden unter Ausnutzung der deshalb größer gewählten Höhe des Reduktionsreaktorgefäßes. Aus diesem Grund wird vorteilhafterweise die Höhe der Schlacke gemessen und bei Überschreiten der maximal zulässigen Höhe und bei Unterschreiten eines Grenzwertes der Schlackenhöhe korrigierend eingegriffen.

Vorzugsweise wird nach dem Einbringen von Reststoffen und/oder Hilfsstoffen und/oder Reduktionsmitteln und vor Ausbringen der aufbereiteten Schlacke ein Sedimentieren von Metalltröpfchen aus der Schlacke abgewartet.

Zur Schonung des feuerfesten Materials im Reaktorgefäß und zur Einsparung des Energieeinbringens erfolgt zweckmäßig die Behandlung der Schlacke im Reaktorgefäß bei einer geringeren Temperatur als ein Granulieren der aufbereiteten Schlacke.

Ein erfindungsgemäßes Verfahren kann in einer Anlage mit folgenden Merkmalen durchgeführt werden:
- einen kippbaren Pfannenreaktor, bei dessen Innenraum die Höhe den größten Durchmesser überschreitet, und der mit
- Gas, vorzugsweise Inertgas, zuführenden Bodendüsen und/oder Bodenspülsteinen,
- mindestens einer Sauerstoff zuführenden, von oben in den Pfannenreaktor einsetzbaren Lanze,
- mit mindestens einer ein kohlenstoffhältiges Reduktionsmittel zuführenden Lanze, die von oben in den Pfannenreaktor einsetzbar ist,
- und mit einer elektrischen Heizvorrichtung, vorzugsweise von oben einsetzbaren Lichtbogenelektroden, ausgestattet ist.

Um die aufzubereitende Schlacke über einen längeren Zeitraum in das Reaktorgefäß einbringen zu können, ist eine langsam kippbare Schlackenchargiervorrichtung für flüssige Schlacke vorgesehen, wobei die Geschwindigkeit des Kippens abgestimmt ist auf die Chargefolgezeiten der aus den primärtechnischen Aggregaten, vor allem den Konvertern (üblicherweise LD-Konverter bzw. AOD-Konverter im Falle von Rostfrei-Stahlwerken) anfallenden flüssigen Schlacke.

Für das Einbringen erstarrter Schlacke hat sich eine eigene Chargiervorrichtung als zweckmäßig erwiesen; vorzugsweise ist diese als Vibrationsrinne oder als Schurre oder als Kombination Vibrationsrinne/Schurre ausgebildet.

Der Pfannenreaktor ist vorteilhaft mit mindestens einer von oben einbringbaren Lanze für das Einblasen von Reststoffen und/oder Hilfsstoffen ausgestattet.

Um auch größere stückige Einsatzstoffe, wie z.B. Schrottpakete etc., chargieren zu können, ist das Reaktorgefäß mit einer Öffnung ausgestattet, die dies ermöglicht. Diese Öffnung befindet sich im Deckel des Reaktorgefäßes, der vorteilhaft auch für die Einhaltung eines Unterdruckes zur Absaugung von Abgasen dient.

Nach einer bevorzugte Ausführungsform weist die Lanze mindestens eine Austrittsöffnung für das Reduktionsmittel und mindestens eine auf einem höheren Niveau angeordnete Austrittsöffnung für Reststoffe und/oder Hilfsstoffe auf.

Die Erfindung ist nachfolgend anhand eines in Fig. 1 dargestellten Fließschemas sowie mehrerer Ausführungsbeispiele näher erläutert. Fig. 2 veranschaulicht ein Reaktorgefäß in Seitenansicht, Fig. 3 in Draufsicht. Fig. 4 zeigt das Reaktorgefäß im Schnitt während des Einsatzes.

Mit 1 ist ein Stahlwerkskonverter bezeichnet, aus dem einerseits die Schlacke 2, im dargestellten Fall LD-Schlacke, in eine Schlackenpfanne 3 abgegossen wird und andererseits Stahl 4 ausgebracht wird. Von dieser Schlackenpfanne 3 gelangt die Schlacke 2 mittels einer Transportpfanne 5 zu einem Kippstand 6, der es ermöglicht, durch Kippen der Transportpfanne 5 die flüssige aufzubereitende Schlacke 2 langsam und kontinuierlich in einen aufrechtgerichteten kippbaren Pfannenreaktor 7 einfließen zu lassen.

Die Chargierung der Schlacke 2 erfolgt bevorzugt in flüssiger Form für jene Schlacken, bei denen dies logistisch möglich und sinnvoll ist. Dies ist z.B. bei Konverterschlacke (LD-Schlacke für C-Stahl bzw. AOD-Schlacke bei Rostfrei-Stahl) möglich. Grund für diese bevorzugte Chargierform ist der energetische Vorteil durch den hohen Wärmeinhalt der flüssigen Schlacke 2 mit entsprechend geringerem Energiebedarf für das Aufheizen und die Reduktion der Metalloxide.

Im Pfannenreaktor 7 ist nach dem letzten Abstich der Schlacke 2 noch eine Rest-Eisenschmelze 25 enthalten. Diese wird nur für Reparaturarbeiten ganz abgestochen, ansonsten verbleibt immer mindestens ein Metallsumpf mit ausreichender Höhe (typisch mindestens 0,6 m) im Reaktorgefäß 7. Nach typischerweise jedem fünften Schlackenabstich erfolgt auch ein Abstich des inzwischen durch Reduktion der Metalloxide entstandenen zusätzlichen Metallbades, um eine maximale Metallbadhöhe (typisch ca. 1,25 m) nicht zu überschreiten und damit ausreichend Freeboard zur Ausbildung der Schaumschlacke zu behalten.

Während der Einleerdauer für flüssige Schlacke 2 erfolgt bereits eine Reduktion der enthaltenen Metalloxide (hauptsächlich FeOₓ, daneben noch MnO; bei Rostfrei-Schlacke auch signifikante Mengen Cr₂O₃ und NiO) durch Reaktion mit dem im Metall enthaltenen, gelösten Kohlenstoff.

Der kippbare Pfannenreaktor 7 weist eine den größten Innendurchmesser 8 überschreitende Höhe 9 auf. Er ist mit einer Elektrodenheizung 10 sowie einer oder mehreren, von oben einsetzbaren Lanzen 11 zur mit Inertgas erfolgenden Einblasung von aus Vorratsbehältern 12 zugeführten Einsatzstoffen, wie Reduktionsmitteln, Hilfsstoffen und/oder Reststoffen und/oder Erzen, und mit einer Einrichtung 13 zu einer Probennahme ausgestattet. Diese Lanzen 11 sind vorzugsweise an ihren unteren Enden mit seitlich angeordneten Austrittsöffnungen für die einzubringenden Stoffe versehen. Im Boden des Pfannenreaktors 7 sind Spüldüsen 14 zum Einbringen eines Inertgases, wie Stickstoff, vorgesehen. Weiters dient eine Lanze 15 zum Einblasen von Sauerstoff. Diese reicht nur in den oberen Teil des Innenraumes, d.h. in die sich bildende Schaumschlacke.

Zum Ausbringen von aufbereiteter Schlacke 16 und aufbereiteter Eisenschmelze 17 wird der Pfannenreaktor 7 gekippt und die aufbereitete Schlacke 16 in eine Transportpfanne 18 geleert und sodann zu einer Granulationseinrichtung 19' gebracht. Wird Eisenschmelze 17 ausgebracht, so erfolgt dies ebenfalls durch Kippen des Pfannenreaktors 7 nach dem Ausbringen von Schlacke 16, welche Eisenschmelze 17 mittels einer Transportpfanne 19 gegebenenfalls zu einem Pfannenbehandlungsstand 20 und sodann zum Konverter 1 gebracht wird.

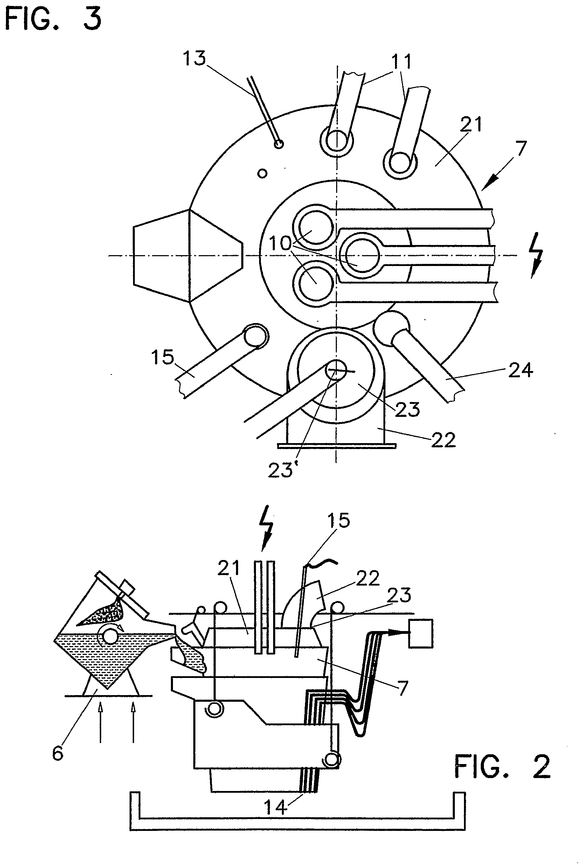

Wie aus den Fig. 2 und 3 zu entnehmen ist, durchsetzen die Elektroden 10 einen der Abgasabsaugung dienenden Deckel 21 des Pfannenreaktors 7 zentral, wogegen die Sauerstoff zuführende Lanze 15 neben der im Deckel 21 vorgesehenen und an eine Absaugleitung 22 angeschlossene Öffnung 23, die mit einem Brenner 23'ausgestattet ist, vorgesehen ist.

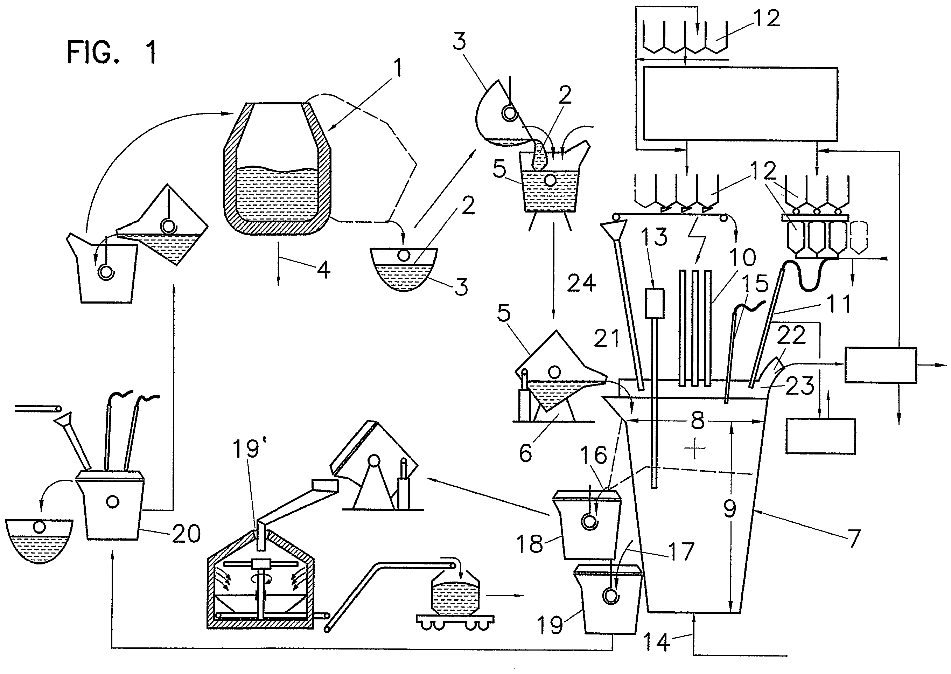

Zum Einbringen von erstarrter Schlacke dient eine in Fig. 1 schematisch dargestellte Fördereinrichtung, z.B. eine Vibrationsrinne 24, mittels der die feste stückige Schlacke ebenfalls über einen längeren Zeitraum, vorzugsweise über den Zeitraum zwischen zwei Ausgießvorgängen, in den Pfannenreaktor 7 einbringbar ist.

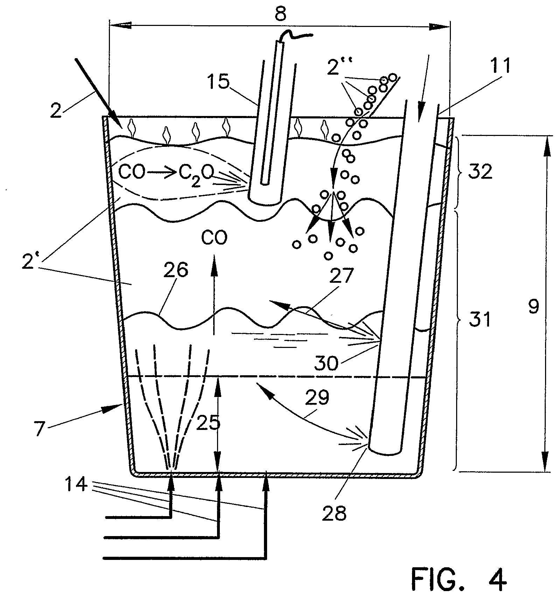

Fig. 4 veranschaulicht die Vorgänge im Inneren des Pfannenreaktors 7. Dieser weist eine Restschmelze 25 von Eisen (Roheisen) auf, die mit sich neu bildender Eisenschmelze ergänzt ist. Über der Eisenschmelze 25 befindet sich Schlacke 2' im schaumförmigen Zustand. Es ist zu ersehen, dass eine Lanze 11 tief in das Innere des Pfannenreaktors 7 reicht und am unteren Ende eine seitliche Austrittsöffnung 28 für das Einbringen von Reduktionsmittel 29 aufweist. Dieses Ende der als Dual-Port-Lanze ausgebildeten Lanze 11 ist bis in die Eisenschmelze 25 vorgeschoben. Oberhalb, und zwar in der Nähe der Höhe der Grenzfläche 26 zwischen der Eisenschmelze 25 und der Schlacke 2', weist die Lanze 11 eine weitere seitliche Austrittsöffnung 30 für das Einbringen von Hilfsstoffen und/oder Reststoffen 27 und gegebenenfalls Erzen auf. Das Einbringen von fester Schlacke 2" ist in dieser Figur ebenfalls veranschaulicht.

In den oberen Bereich der Schaumschlacke 2' ragt die Sauerstoff zuführende Lanze 15, die für eine Nachverbrennung des sich beim Reduzieren der Schlacke bildenden CO sorgt. In diesem Höhenbereich kommt es oberhalb einer reduktiven Zone 31 zur Ausbildung einer oxidativen Zone 32.

Über die im Boden des Pfannenreaktors 7 eingesetzten Spüldüsen 14 wird Inertgas zur Reaktionsbeschleunigung eingeblasen, vorzugsweise Stickstoff.

Zur Regulierung der Schaumschlackenhöhe ist eine Vorrichtung zum Messen der Schaumschlackenhöhe vorgesehen, was mittels einer Kamera, Laser oder Ultraschall zu bewerkstelligen ist.

Die Funktion einer Anlage ist nachfolgend anhand zweier Beispiele erläutert.

### Beispiel A

Die angegebenen Mengen an Schlacken und Reststoffen sind typische spezifische Mengen, wie sie bei der Produktion von 1 Tonne Flüssigstahl (liquid steel = LS), Kohlenstoffstahl, wie z.B. Baustahl, nach dem LD-Verfahren anfallen.

Die dafür benötigten Mengen an Reduktionsmittel 29, Hilfsstoffen 27 und elektrischer Energie sind ebenfalls angegeben.

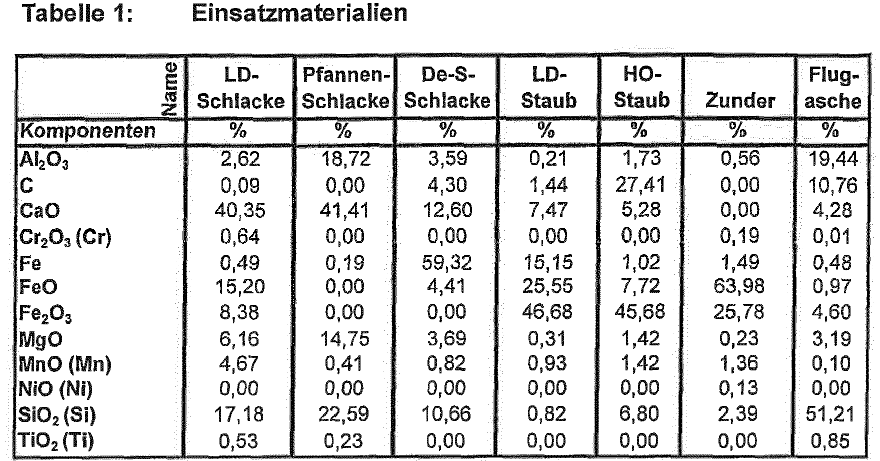

110 kg/t LS flüssige LD-Schlacke 2 mit der in Tabelle 1 angegebenen Zusammensetzung wird aus dem LD-Konverter 1 in eine Schlackenpfanne 3 abgegossen. Der Inhalt dieser Schlackenpfanne 3 wird in eine Transportpfanne 5 gekippt. Anschließend wird die Transportpfanne 5 auf einem Kippstand 6 befestigt und die flüssige Schlacke 2 langsam und kontinuierlich auf ein Roheisen-Metallbad 25 in einem kippbaren pfannenofen-ähnlichen Reduktionsaggregat 7 eingegossen.

12 kg/t LS Pfannenofenschlacke 2" und 8 kg/t LS Entschwefelungs- (De-S-) Schlacke werden über eine Vibrorinne 24 und eine Schurre langsam und kontinuierlich in den Pfannenreaktor 7 chargiert (Zusammensetzung ebenfalls in Tabelle 1).

Die nötige Energie (90 kWh/t LS) für das Aufheizen der Schlacke 2, 2" und die Kompensation der Wärmeverluste, aber auch für die endotherme, direkte Reduktion der Metalloxide (vor allem Eisenoxid) mittels gelösten Kohlenstoffs, wird elektrisch über drei Elektroden 10 eingebracht.

Die Reduktion der Metalloxide der eingebrachten Schlacke 2, 2" erfolgt bereits während des Einleerens und gleichzeitigen Heizens über direkte Reduktion durch den im flüssigen Roheisen 25 gelösten Kohlenstoff. Der verbrauchte Kohlenstoff wird durch Tiefeinblasen von Reduktionsmittel 29, d.h. 4,7 kg/t LS Kohlestaub und 2 kg/t LS Koks, in das Metallbad 25 ersetzt (Analysen sh. Tabelle 2).

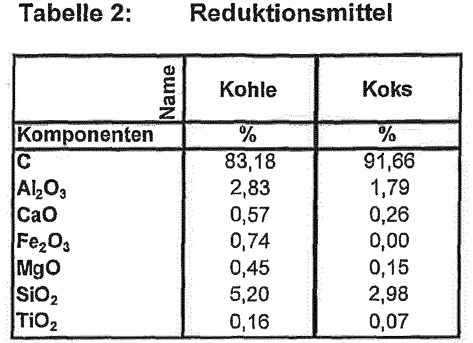

Zusätzlich zum Reduktionsmittel 29 werden die typisch beim C-Stahlwerksbetrieb anfallenden Reststoffe 27, d.h. 17 kg/t LS LD-Staub, 15 kg/t LS Hochofenstaub und 5 kg/t LS Zunder mit N₂, über Einblaslanzen 11 eingeblasen (Zusammensetzungen in Tabelle 1). Das Einblasen dieser eisenoxidhältigen Reststoffe erfolgt in der Nähe der Grenzschicht 26 zwischen Eisenschmelze 25/Schlacke 2, um die Oberfläche dieser Grenzschicht zu vergrößern.

Zur Einstellung der optimalen Schlackenzusammensetzung für einen hydraulischen Binder als Klinkerersatz werden zusätzlich 35 kg/t LS Flugasche als SiO₂-Lieferant eingeblasen.

Für das pneumatische Einblasen und die Bodenspülung werden 6 Nm³ N₂/t LS benötigt.

Die Reduktion erfolgt bei einer Temperatur von 1420°C. In diesem Temperaturbereich bildet sich durch das bei der Reduktion entstehende CO eine Schaumschlacke 2'. Die große Kontaktfläche der Metalloxide mit den gezielt darin dispergierten Metalltröpfchen ergibt eine effiziente direkte Reduktion durch den in den Metalltröpfchen gelösten Kohlenstoff.
Zur Verbesserung der Energiebilanz und zur Erzielung des angegebenen Wertes an elektrischer Heizleistung wird eine teilweise Nachverbrennung des bei der Reduktion entstehenden CO durch O₂ vorgenommen. 4 kg/t LS O₂ werden über O₂-Lanzen 15 im oberen Drittel der Schaumschlacke 2' eingedüst und oxidieren 25% des CO zu CO₂. Dieser relativ niedrige Nachverbrennungsgrad ist gut beherrschbar und ergibt einen effizienten Wärmetransfer der dabei freiwerdenden Energie zurück in die Schaumschlacke 2' und in die Metallschmelze 25. Die Einblasung des O₂ erfolgt derart, dass eine Durchmischung dieser Oxidationszone 32 mit der Reduktionszone 31, in der die Reduktion der Metalloxidteilchen erfolgt, weitestgehend vermieden wird.

Im Abgas finden sich durch anschließende vollständige Verbrennung nur mehr CO₂, u.zw. 45kg/t LS. Dies ist ein sehr niedriger Wert, der nur durch die bevorzugte direkte Reduktion und elektrische Heizung erreicht werden kann und entsprechende Vorteile angesichts kommender CO₂-Steuern bietet.

Der Staubgehalt ist wegen des Tiefeinblasens der Kohle und aufgrund der Filterwirkung der Schaumschlacke 2' mit 1 kg/t LS ein sehr niedriger, was einen Vorteil bei der Ausbringung und der Vermeidung von Filterstaub darstellt.

Nach Umsatz der gesamten Menge an LD-Schlacke 2, beendetem Einblasen der übrigen Reststoffe 27 und des Reduktionsmittels 29 und abgeschlossener Reduktion wird eine Schlackenprobe gezogen und die Übereinstimmung mit der vorberechneten Analyse geprüft. Die erreichte Zielanalyse der produzierten 125 kg/t LS Schlacke 16 ist in Tabelle 3 enthalten.

**Tabelle 3: Schlackeprodukt**

| **Component** | **%** |
|---|---|
| **CaO** | **45,60** |
| **SiO2** | **33,82** |
| **Al2O3** | **10,52** |
| **MgO** | **7,24** |
| **MnO** | **1,20** |
| **TiO2** | **0,80** |
| **FeO** | **0,20** |
| **Fe_met.** | **0,10** |
| **Cr2O3** | **0,20** |
| **P2O5** | **0,30** |
| **Sum** | **99,98** |

Anschließend wird die Temperatur auf 1450°C erhöht, um einerseits die notwendige Temperatur für die anschließende Granulation der aufbereiteten Schlacke 16 zu erhalten und andererseits durch die verringerte Viskosität das Absetzen der dispergierten Metalltröpfchen aus der Schaumschlacke zu fördern. Zu diesem Zweck wird eine Wartezeit von 5 min eingehalten.

Anschließend wird die Schlacke bis auf eine Restmenge durch Kippen des Reaktorgefäßes 7 in eine Transportpfanne 18 geleert. Der Inhalt der Transportpfanne 18 wird in einen Trockengranulator 19 chargiert. Die Granulation mit rascher und daher glasartiger Erstarrung erfolgt durch Zerteilen des Schlackenstrahls auf einem Rotationsteller in feine Tröpfchen und rasches Abkühlen der feinen Tröpfchen im Luftstrom.

Das Metallbad 25 samt den aus der Reduktion erhaltenen 54 kg/t LS Metall (Analyse sh. Tabelle 4) wird nicht nach jeder Schlackenbehandlung im Pfannenreaktor 7 abgestochen, sondern verbleibt so lange darin, bis kein ausreichendes Freeboard für die Schaumschlacke 2' mehr gegeben ist. Dies ist typisch nach fünf Behandlungen der Fall, kann aber bei Bedarf über die Geometrie des Pfannenreaktors 7 variiert werden.

**Tabelle 4: Metallprodukt**

| **Component** | **%** |
|---|---|
| **Fe** | 87,11 |
| **C** | 4,00 |
| **Mn** | 6,10 |
| **Cr** | 0,90 |
| **Ni** | 0,01 |
| **P** | 1,44 |
| **S** | 0,04 |
| **Sum** | **99,60** |

Anschließend wird der Pfannenreaktor 7 wieder in Behandlungsposition gebracht und die nächste Charge LD-Schlacke 2 wird wiederum langsam und kontinuierlich zugegeben. Auch die übrigen Prozessschritte wiederholen sich nach dem oben angegebenen Schema.

Nach den fünf Behandlungen wird auch das Metallbad 25 bis auf einen Metallsumpf von mindestens 0,6 m Höhe abgestochen und einer De-P-Behandlung unterzogen. Danach dient es entweder zur Erhöhung der in einem Integrierten Hüttenwerk verfügbaren Roheisenmenge und damit zur Produktionserhöhung, oder zur Einsparung von Rohstoffen, Energie und CO₂-Produktion in den Primäraggregaten Kokerei und Hochofen.

### Beispiel B

Die angegebenen Mengen an Schlacken und Stäuben sind typische spezifische Mengen, wie sie bei der Produktion von 1 Tonne flüssigem Rostfreistahl anfallen.

Die dafür benötigten Mengen an Reduktionsmittel 29, Hilfsstoffen 27 und elektrischer Energie sind berechnet und ebenfalls angegeben.

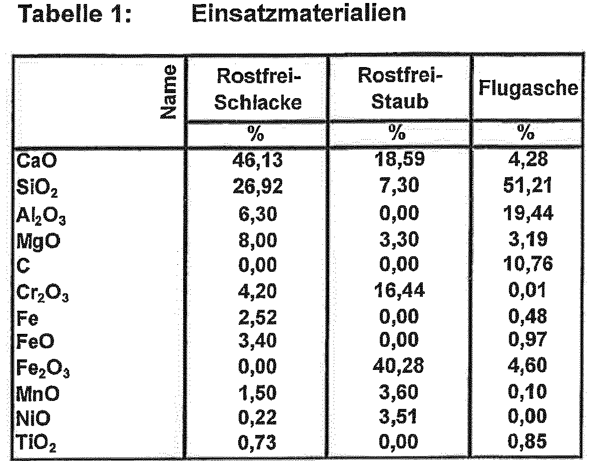

317 kg/t LS flüssige Rostfrei-(AOD-)Schlacke 2 mit der in Tabelle 1 angegebenen Zusammensetzung wird aus dem AOD-Konverter 1 in eine Schlackenpfanne 3 abgegossen. Der Inhalt dieser Schlackenpfanne 3 wird in eine Transportpfanne 5 gekippt. Anschließend wird die Transportpfanne 5 auf einem Kippstand 6 befestigt und die flüssige Schlacke 2 langsam und kontinuierlich auf das Cr-/Ni-hältige Rest-Metallbad 25 in einem kippbaren pfannenofen-ähnlichen Reduktionsaggregat 7 eingegossen.

Die nötige Energie (204 kWh/t LS) für das Aufheizen der Schlacke 2 und die Kompensation der Wärmeverluste, aber auch für die endotherme, direkte Reduktion der Metalloxide (vor allem Eisenoxid, aber auch hohe Mengen Chromoxid und Nickeloxid) mittels gelösten Kohlenstoffes, wird elektrisch über drei Elektroden 10 eingebracht.

Die Reduktion der Metalloxide der eingebrachten Schlacke 2 erfolgt bereits während des Einleerens und gleichzeitigen Heizens über direkte Reduktion durch den im legierten Roheisen gelösten Kohlenstoff. Der verbrauchte Kohlenstoff wird durch Tiefeinblasen von Reduktionsmittel 29, d.h. 6,1 kg/t LS Kohlestaub und 2,0 kg/t LS Koks, in das Metallbad 25 ersetzt (Analysen sh. Tabelle 2).

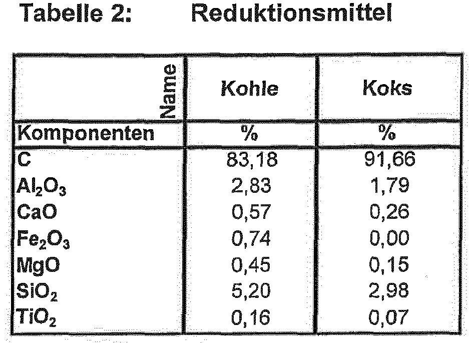

Zusätzlich zum Reduktionsmittel 29 werden die typisch beim Rostfrei-Stahlwerksbetrieb anfallenden Reststoffe 27, d.h. hoch-Cr-und Ni-hältigen 36 kg/t LS Rostfrei-Staub, über Einblaslanzen 11 eingeblasen (Zusammensetzung ebenfalls in Tabelle 1). Das Einblasen erfolgt in der Nähe der Grenzschicht 26 zwischen Metallbad 25/Schaumschlacke 2', um die Oberfläche dieser Grenzschicht 26 zu vergrößern.

Zur Einstellung der optimalen Schlackenzusammensetzung für einen hydraulischen Binder als Klinkerersatz werden zusätzlich 70 kg/t LS Flugasche als SiO₂-Lieferant eingeblasen. Vorteilhafterweise wird eine Flugasche mit relativ hohem Kohlenstoffgehalt verwendet.

Für das pneumatische Einblasen und die Bodenspülung werden 7 Nm³ N₂/t LS benötigt.

Die Reduktion erfolgt zunächst mit Kohlenstoff bei einer Temperatur von 1430°C. In diesem Temperaturbereich bildet sich durch das bei der Reduktion entstehende CO eine Schaumschlacke 2'. Die große Kontaktfläche der Metalloxide mit den gezielt darin dispergierten Metalltröpfchen ergibt eine effiziente direkte Reduktion durch den in den Metalltröpfchen gelösten Kohlenstoff.

Zur Verbesserung der Energiebilanz und zur Erzielung des angegebenen Wertes an elektrischer Heizleistung wird eine teilweise Nachverbrennung des bei der Reduktion entstehenden CO durch O₂ vorgenommen. 4,0 kg/t LS O₂ werden über O₂-Lanzen 15 im oberen Drittel der Schaumschlacke 2' eingedüst und oxidieren 25% des CO zu CO₂. Dieser relativ niedrige Nachverbrennungsgrad ist gut beherrschbar und ergibt einen effizienten Wärmetransfer der dabei freiwerdenden Energie zurück in die Schaumschlacke 2' und in die Metallschmelze 25. Die Einblasung des O₂ erfolgt derart, dass eine Durchmischung dieser Oxidationszone 32 mit der Reduktionszone 31, in der die Reduktion der Metalloxidteilchen erfolgt, weitestgehend vermieden wird.

Im Abgas finden sich durch anschließende vollständige Verbrennung nur mehr CO₂, u.zw. 44kg/t LS. Dies ist ein sehr niedriger Wert, der nur durch die bevorzugte direkte Reduktion und elektrische Heizung erreicht werden kann und entsprechende Vorteile angesichts kommender CO₂-Steuern bietet.

Der Staubgehalt ist wegen des Tiefeinblasens der Kohle und aufgrund der Filterwirkung der Schaumschlacke 2' mit 1,2 kg/t LS ein sehr niedriger, was einen Vorteil bei der Ausbringung und der Vermeidung von Filterstaub darstellt.

Nach der Phase mit Chargierung der Rostfrei-Schlacke 2, der Rostfrei-Stäube 27 und der Flugasche und der Reduktion mittels des über Einblasen von Reduktionsmitteln 29 ersetzten, im Metallbad 25 gelösten Kohlenstoffs wird eine Schlackenprobe gezogen und die Übereinstimmung mit der vorberechneten Analyse geprüft. Anschließend werden zur Absenkung der Gehalte an schwer reduzierbaren Oxiden, vor allem von Cr₂O₃, 1 kg/t LS Fe75Si als stärkeres Reduktionsmittel zugegeben und eine Wartezeit von 5 min eingehalten. Die erreichte Zielanalyse der produzierten 354 kg/t LS Schlacke 16 ist in Tabelle 3 enthalten.

**Tabelle 3: Schlackeprodukt**

| **Component** | **%** |
|---|---|
| **CaO** | **44,59** |
| **SiO2** | **35,86** |
| **Al2O3** | **9,66** |
| **MgO** | **8,24** |
| **TiO2** | **0,80** |
| **MnO** | **0,50** |
| **FeO** | **0,20** |
| **Fe_met.** | **0,10** |
| **Cr2O3** | **0,02** |
| **P2O5** | **0,01** |
| **Sum** | **99,98** |

Anschließend wird die Temperatur auf 1460°C erhöht, um einerseits die notwendige Temperatur für die anschließende Granulation der aufbereiteten Schlacke 16 zu erhalten und andererseits durch die verringerte Viskosität das Absetzen der dispergierten Metalltröpfchen aus der Schaumschlacke 2' zu fördern. Zu diesem Zweck wird eine Wartezeit von 5 min eingehalten.

Anschließend wird die Schlacke bis auf eine Restmenge durch Kippen des Pfannenreaktors 7 in eine Transportpfanne 18 geleert. Der Inhalt der Transportpfanne 18 wird in einen Trockengranulator 19 chargiert. Die Granulation mit rascher und daher glasartiger Erstarrung erfolgt durch Zerteilen des Schlackenstrahls auf einem Rotationsteller in feine Tröpfchen und rasches Abkühlen der feinen Tröpfchen im Luftstrom.

Das Metallbad 25 samt den aus der Reduktion erhaltenen 50 kg/t LS Metall (Analyse sh. Tabelle 4) wird nicht nach jeder Schlackenbehandlung im Pfannenreaktor 7 abgestochen, sondern verbleibt so lange darin, bis kein ausreichendes Freeboard für die Schaumschlacke 2' mehr gegeben ist. Dies ist typisch nach fünf Behandlungen der Fall, kann aber bei Bedarf über die Geometrie des Pfannenreaktors 7 variiert werden.

**Tabelle 4: Metallprodukt**

| **Component** | **%** |
|---|---|
| **Fe** | 58,12 |
| **C** | 5,00 |
| **Cr** | 26,20 |
| **Mn** | 6,77 |
| **Ni** | 3,08 |
| **P** | 0,10 |
| **S** | 0,04 |
| **Sum** | **99,31** |

Anschließend wird der Pfannenreaktor wieder in Behandlungsposition gebracht, und die nächste Charge LD-Schlacke 2 wird wiederum langsam und kontinuierlich zugegeben. Auch die übrigen Prozessschritte wiederholen sich nach dem oben angegebenen Schema.

Nach den fünf Behandlungen wird auch das Metallbad 25 bis auf einen Metallsumpf von mindestens 0,6 m Höhe abgestochen und, falls nötig, einer De-P-Behandlung unterzogen. Danach dient es entweder zur Erhöhung der in einem Integrierten Hüttenwerk verfügbaren Roheisenmenge und damit zur Produktionserhöhung oder zur Einsparung von Rohstoffen, Energie und CO₂-Produktion in den Primäraggregaten Kokerei und Hochofen.

Ein großer Vorteil des erfindungsgemäßen Verfahrens ist die Möglichkeit, eine gezielte Feineinstellung der erzeugten Schlacke durch Einblasen verschiedener Reststoffe und bei Bedarf auch Hilfsstoffe vorzunehmen. Vorzugsweise wird anhand der bekannten Analyse der Einsatzstoffe der Bedarf der verschiedenen Einsatzstoffe in einem Prozessmodell berechnet und die entsprechenden Mengen über die Steuerung der Parameter der Einblasanlage eingedüst. Eine Überprüfung erfolgt durch eine Probenahme aus Schlacke und Metallbad.

Die Temperatur kann einerseits mittels automatisierter Temperatur-Lanze (Tauch-Thermoelement) ermittelt werden. Andererseits kann die Temperatur dazwischen mittels Pyrometer, vorzugsweise kontinuierlich, kontrolliert werden.

## Patentansprüche

1. Verfahren zum Verwerten von aus der Eisenhüttenindustrie stammender und oxidische Eisenteilchen enthaltender, in Stahlwerkskonverten anfallender Schlacke (2, 2"), unter Zugabe eines Reduktionsmittels (29) und Reduktion oxidischer Eisenteilchen der Schlacke (2, 2") sowie gegebenenfalls vorhandener anderer Metalloxide mit diesem Reduktionsmittel (29), **gekennzeichnet durch** die Kombination folgender Merkmale:
- Chargieren der Schlacke (2, 2") in ein Reaktorgefäß (7), vorzugsweise in einen kippbaren Pfannenreaktor (7), auf eine Rest-Eisenschmelze (25), die gelösten Kohlenstoff enthält, langsam und kontinuierlich über einen längeren Zeitraum,
- elektrisches Aufheizen der Schlacke (2) und der Rest-Eisenschmelze sowie sich neu bildender Eisenschmelze (17) über einen längeren Zeitraum,
- Einblasen eines kohlenstoffhältigen Reduktionsmittels (29) mit Gas, vorzugsweise mit Inertgas, über einen längeren Zeitraum mittels einer Lanze (11) in einen Bereich nahe der Grenzfläche (26) zwischen Schlacke (2) und Eisenschmelze (25) oder direkt in die Eisenschmelze (25), und zwar unter Lösen von Kohlenstoff in der Eisenschmelze (25) und unter Vermischen von Eisenschmelze (25) und Schlacke (2),
- Lösen des Kohlenstoffes des Reduktionsmittels (29) in der Eisenschmelze (25) und
- Reduktion von oxidischen Eisenteilchen der Schlacke (2) unter Bildung von metallischem Eisen und CO über einen längeren Zeitraum,
- Bildung einer Schaumschlacke (2') durch das entstehende CO über einen längeren Zeitraum,
- Einbringen eines sauerstoffhältigen Gases oder von Sauerstoff in die Schaumschlacke (2') und Nachverbrennung von CO zu CO₂ über einen längeren Zeitraum, wobei das Einbringen in der oberen Hälfte, vorzugsweise im obersten Drittel der Höhe der Schlacke (2'), durchgeführt wird,
- Bodenspülung des Reaktorgefäßes (7) mit Inertgas über einen längeren Zeitraum,
- Ausbringen der aufbereiteten Schlacke (16) und gegebenenfalls
- nachfolgend Ausbringen von Eisenschmelze (17) unter Belassung einer gelösten Kohlenstoff enthaltenden Rest-Eisenschmelze (25) im Reaktorgefäß (7),
wobei sich längerer Zeitraum auf den Zeitraum im wesentlichen von einem Ausbringen von Schlacke sowie gegebenenfalls Eisenschmelze bis zum nachfolgenden Ausbringen von Schlacke bezieht.

2. Verfahren nach Anspruch 1, **gekennzeichnet durch** Einblasen von Reststoffen (27) insbesondere Hüttenreststoffen, wie Schrottplatzrückständen, eisenoxidhaltigen Stäuben und Schlämmen aus Gasreinigungsprozessen, Zunder, etc. mit Gas, vorzugsweise mit Inertgas, mittels einer Lanze (11) in einen Bereich nahe der Grenzfläche (26) zwischen Schlacke (2') und Eisenschmelze (25) oder direkt in die Eisenschmelze (25), und zwar unter Vermischen von Eisenschmelze (25) und Schlacke (2'), langsam und kontinuierlich über einen längeren Zeitraum.

3. Verfahren nach Anspruch 1 oder 2, **gekennzeichnet durch** Einblasen von Hilfsstoffen (27), wie Bauxit und/oder Feinkalk und/oder Siliziumträger, mittels Gas, vorzugsweise mit Inertgas, mittels einer Lanze (11) in einen Bereich nahe der Grenzfläche (26) zwischen Schlacke (2') und Eisenschmelze (25) oder direkt in die Eisenschmelze (25), und zwar jeweils unter Vermischen von Eisenschmelze (25) und Schlacke (2'), langsam und kontinuierlich über einen längeren Zeitraum.

4. Verfahren nach Anspruch 2 oder 3, **dadurch gekennzeichnet, dass** Reststoffe (27) und/oder Hilfsstoffe (27) in einer anderen Höhe als das Reduktionsmittel (29) in das Reaktorgefäß (7) eingeblasen werden, vorzugsweise oberhalb des Einblasens der Reduktionsmittel (29).

5. Verfahren nach einem oder mehreren der Ansprüche 1 bis 4, **dadurch gekennzeichnet, dass** das Einblasen eines kohlenstoffhältigen Reduktionsmittels (29) und/oder von Reststoffen (27) und/oder von Hilfsstoffen (27) schräg gegen die Grenzfläche (26) der im Reaktorgefäß (7) befindlichen Eisenschmelze (25) und der darüber befindlichen Schlacke (2') erfolgt.

6. Verfahren nach einem oder mehreren der Ansprüche 1 bis 5, **dadurch gekennzeichnet, dass** das Einblasen eines kohlenstoffhältigen Reduktionsmittels (29) nur so lange durchgeführt wird, bis maximal die Sättigungsgrenze von Kohlenstoff in der Eisenschmelze (25) erreicht wird.

7. Verfahren nach einem oder mehreren der Ansprüche 1 bis 6, **dadurch gekennzeichnet, dass** das Einblasen von Hilfsstoffen (27) und/oder Reststoffen (27) in einem Höhenbereich beiderseits der Grenzfläche (26) zwischen Schlacke und Eisenschmelze erfolgt, der sich über maximal 25 % der Gesamthöhe der Schlacke bzw. einem gleichen Höhenbereich in der Eisenschmelze (25), vorzugsweise maximal 10 % der Gesamthöhe der Schlacke (2') bzw. spiegelbildlich dazu in der Eisenschmelze (25) erstreckt.

8. Verfahren nach einem der Ansprüche 1 bis 7, **dadurch gekennzeichnet, dass** die einzublasenden Stoffe (27, 29) über Seitenaustrittsöffnungen (28, 30) der Lanze (11) in etwa horizontaler Richtung oder leicht schräg gegen die idealisierte ebene Grenzfläche (26) eingeblasen werden.

9. Verfahren nach einem oder mehreren der Ansprüche 1 bis 8, **dadurch gekennzeichnet, dass** das elektrische Aufheizen mittels Lichtbogens und/oder Widerstandsheizung erfolgt.

10. Verfahren nach einem oder mehreren der Ansprüche 1 bis 9, **dadurch gekennzeichnet, dass** die Schlacke (2) zumindest teilweise in flüssiger Form chargiert wird.

11. Verfahren nach einem oder mehreren der Ansprüche 1 bis 10, **dadurch gekennzeichnet, dass** die Reduktion der Metalloxide überwiegend über eine direkte Reduktion mit Hilfe des in der Metallschmelze gelösten Kohlenstoffs erfolgt.

12. Verfahren nach einem oder mehreren der Ansprüche 1 bis 11, **gekennzeichnet durch** einen Einsatz von gegenüber Kohlenstoff stärkerer Reduktionsmittel, wie Aluminium, Ferrosilizium, Calciumcarbid, etc., vorzugsweise in der Endphase der Reduktion vor einem Ausbringen der aufbereiteten Schlacke (2').

13. Verfahren nach einem oder mehreren der Ansprüche 1 bis 12, **dadurch gekennzeichnet, dass** Hilfsstoffe (27) zur Konditionierung der Schlackeeigenschaften nach Abschluss der Zugabe von Reduktionsmitteln (29) zugegeben werden.

14. Verfahren nach einem oder mehreren der Ansprüche 1 bis 13, **dadurch gekennzeichnet, dass** zusätzlich eisenoxidhaltige Erze, wie Feinerze, Chromiterze, eingesetzt werden.

15. Verfahren nach einem oder mehreren der Ansprüche 1 bis 14, **dadurch gekennzeichnet, dass** die Höhe der Schlacke (2') gemessen wird und bei Überschreiten der maximal zulässigen Höhe und bei Unterschreiten eines Grenzwertes der Schlackenhöhe korrigierend eingegriffen wird.

16. Verfahren nach einem oder mehreren der Ansprüche 1 bis 15, **dadurch gekennzeichnet, dass** nach dem Einbringen von Reststoffen (27) und/oder Hilfsstoffen (27) und/oder Reduktionsmitteln (29) und vor Ausbringen der aufbereiteten Schlacke (2') ein Sedimentieren von Metalltröpfchen aus der Schlacke (2') abgewartet wird.

## Claims

1. Process for utilizing slag (2, 2") which originates from the iron smelting industry and is obtained in steel works convertors and contains oxidic iron particles, with addition of a reducing agent (29) and reduction of oxidic iron particles of the slag (2, 2") and also any other metal oxides present by means of this reducing agent (29), **characterized by** the combination of the following features:
- charging of the slag (2, 2") into a reactor vessel (7), preferably into a tiltable laden reactor (7), onto a residual iron melt (25) which contains dissolved carbon, slowly and continuously over a prolonged period of time,
- electric heating of the slag (2) and of the residual iron melt and also freshly formed iron melt (17) over a prolonged period of time,
- blowing-in of a carbon-containing reducing agent (29) by means of gas, preferably inert gas, over a prolonged period of time by means of a lance (11) into a region close to the interface (26) between slag (2) and iron melt (25) or directly into the iron melt (25), with dissolution of carbon in the iron melt (25) and with mixing of iron melt (25) and slag (2),
- dissolution of the carbon of the reducing agent (29) in the iron melt (25) and
- reduction of oxidic iron particles of the slag (2) to form metallic iron and CO over a prolonged period of time,
- formation of a foamed slag (2') by means of the CO formed over a prolonged period of time,
- introduction of an oxygen-containing gas or of oxygen into the foamed slag (2') and after-combustion of CO to CO₂ over a prolonged period of time, with the introduction being carried out in the upper half, preferably in the upper third, of the height of the slag (2'),
- flushing of the bottom of the reactor vessel (7) with inert gas over a prolonged period of time,
- discharge of the treated slag (16) and optionally
- subsequently discharge of iron melt (17) leaving a residual iron melt (25) containing dissolved carbon in the reactor vessel (7),
with the term prolonged period of time referring to the period of time essentially from discharge of slag and optionally iron melt until the subsequent discharge of slag.

2. Process according to Claim 1, **characterized by** blowing-in of residual materials (27), in particular smelting residues such as scrap yard residues, iron oxide-containing dusts and sludges from gas purification processes, scale, etc., by means of gas, preferably inert gas, by means of a lance (11) into a region close to the interface (26) between slag (2') and iron melt (25) or directly into the iron melt (25), with mixing of iron melt (25) and slag (2'), slowly and continuously over a prolonged period of time.

3. Process according to Claim 1 or 2, **characterized by** blowing-in of auxiliaries (27) such as bauxite and/or fine lime and/or silicon carriers by means of gas, preferably inert gas, by means of a lance (11) into a region close to the interface (26) between slag (2') and iron melt (25) or directly into the iron melt (25), in each case with mixing of iron melt (25) and slag (2'), slowly and continuously over a prolonged period of time.

4. Process according to Claim 2 or 3, **characterized in that** residual materials (27) and/or auxiliaries (27) are blown into the reactor vessel (7) at a different height than the reducing agent (29), preferably above the blowing-in of the reducing agent (29).

5. Process according to one or more of Claims 1 to 4, **characterized in that** the blowing-in of a carbon-containing reducing agent (29) and/or of residual materials (27) and/or of auxiliaries (27) is carried out obliquely to the interface (26) of the iron melt (25) present in the reactor vessel (7) and the slag (2') present above the iron melt.

6. Process according to one or more of Claims 1 to 5, **characterized in that** the blowing-in of a carbon-containing reducing agent (29) is carried out until at most the saturation limit of carbon in the iron melt (25) is attained.

7. Process according to one or more of Claims 1 to 6, **characterized in that** the blowing-in of auxiliaries (27) and/or residual materials (27) is carried out in a height range either side of the interface (26) between slag and iron melt which extends over not more than 25% of the total height of the slag or in the same height range in the iron melt (25), preferably not more than 10% of the total height of the slag (2') or in a mirror image thereto in the iron melt (25).

8. Process according to any of Claims 1 to 7, **characterized in that** the materials (27, 29) to be blown in are blown in via side exit openings (28, 30) of the lance (11) in an approximately horizontal direction or slightly obliquely to the idealized flat interface (26).

9. Process according to one or more of Claims 1 to 8, **characterized in** the electric heating is carried out by means of an electric arc and/or resistance heating.

10. Process according to one or more of Claims 1 to 9, **characterized in that** the slag (2) is at least partly charged in liquid form.

11. Process according to one or more of Claims 1 to 10, **characterized in that** the reduction of the metal oxides is carried out predominantly by direct reduction by means of the carbon dissolved in the metal melt.

12. Process according to one or more of Claims 1 to 11, **characterized by** use of reducing agents which are stronger than carbon, for example aluminium, ferrosilicon, calcium carbide, etc., preferably in the final phase of the reduction before discharge of the treated slag (2').

13. Process according to one or more of Claims 1 to 12, **characterized in that** auxiliaries (27) for conditioning the slag properties are added after the addition of reducing agents (29) has been concluded.

14. Process according to one or more of Claims 1 to 13, **characterized in that** iron oxide-containing ores, for example fine ore, chromite ore, are additionally used.

15. Process according to one or more of Claims 1 to 14, **characterized in that** the height of the slag (2') is measured and corrective measures are undertaken when the maximum permissible height is exceeded and when the slag height falls below a limit value.

16. Process according to one or more of Claims 1 to 15, **characterized in that** after the introduction of residual materials (27) and/or auxiliaries (27) and/or reducing agents (29) and before discharge of the treated slag (2'), sedimentation of metal droplets from the slag (2') is awaited.

## Revendications

1. Procédé de valorisation de scories (2, 2") provenant de l'industrie sidérurgique et contenant des particules de fer obtenues par voie d'oxydation, par ajout d'un agent réducteur (29) et réduction des particules de fer, obtenues par voie d'oxydation, des scories (2, 2"), ainsi que d'autres oxydes de métal éventuellement présents, avec cet agent réducteur (29), **caractérisé par** la combinaison des caractéristiques suivantes :
- chargement des scories (2, 2") dans une cuve de réacteur (7), de préférence dans un réacteur à poche de coulée basculante (7), sur du fer fondu résiduel (25) contenant du carbone dissous, lentement et en continu, pendant une période prolongée,
- chauffage par voie électrique des scories (2) et du fer fondu résiduel, ainsi que du fer fondu en cours de formation (17), pendant une période prolongée,
- injection par soufflage d'un agent réducteur (29) contenant du carbone, avec du gaz, de préférence un gaz inerte, pendant une période prolongée, au moyen d'une lance (11), dans une zone proche de l'interface (26) entre les scories (2) et le fer fondu (25) ou directement dans le fer fondu (25), une dissolution du carbone dans le fer fondu (25) et un mélange de fer fondu (25) et de scories (2) s'opérant,
- dissolution du carbone de l'agent réducteur (29) dans le fer fondu (25) et
- réduction des particules de fer, obtenues par voie d'oxydation, des scories (2), avec formation de fer métallique et de CO, pendant une période prolongée,
- formation de scories expansées (2'), pendant une période prolongée, sous l'effet du CO produit,
- introduction d'un gaz contenant de l'oxygène ou introduction d'oxygène dans les scories expansées (2') et post-combustion du CO en CO₂, pendant une période prolongée, l'introduction ayant lieu dans la moitié supérieure, de préférence dans le tiers supérieur de la hauteur des scories (2'),
- rinçage du fond de la cuve de réacteur (7) avec un gaz inerte, pendant une période prolongée,
- évacuation des scories traitées (16) et, éventuellement,
- évacuation consécutive de fer fondu (17), tout en laissant un fer fondu résiduel (25) contenant du carbone dissous dans la cuve du réacteur (7),
l'expression « période prolongée » se référant à la période s'étendant essentiellement d'une évacuation de scories et, éventuellement, de fer fondu jusqu'à l'évacuation suivante de scories.

2. Procédé selon la revendication 1, **caractérisé par** l'injection par soufflage de résidus (27), notamment de sous-produits sidérurgiques (27), tels que des déchets de parcs à ferrailles, des poussières contenant des oxydes de fer et des boues provenant de procédés de purification du gaz, des mâchefers, etc., avec du gaz, de préférence un gaz inerte, au moyen d'une lance (11), dans une zone proche de l'interface (26) entre les scories (2') et le fer fondu (25) ou directement dans le fer fondu (25), un mélange de fer fondu (25) et de scories (2) s'opérant, lentement et en continu, pendant une période prolongée.

3. Procédé selon la revendication 1 ou 2, **caractérisé par** l'injection par soufflage de matières auxiliaires (27) telles que de la bauxite et/ou de la chaux pulvérisée et/ou des matériaux porteurs de silicium, avec du gaz, de préférence un gaz inerte, au moyen d'une lance (11), dans une zone proche de l'interface (26) entre les scories (2') et le fer fondu (25) ou directement dans le fer fondu (25), un mélange de fer fondu (25) et de scories (2) s'opérant à chaque fois, lentement et en continu, pendant une période prolongée.

4. Procédé selon la revendication 2 ou 3, **caractérisé en ce que** des résidus (27) et/ou des matières auxiliaires (27) sont injectés par soufflage à une hauteur différente de celle de l'agent réducteur (29) dans la cuve de réacteur (7), de préférence au-dessus de l'injection par soufflage des agents réducteurs (29).

5. Procédé selon une ou plusieurs des revendications 1 à 4, **caractérisé en ce que** l'injection par soufflage d'un agent réducteur (29) contenant du carbone et/ou de résidus (27) et/ou de matières auxiliaires (27) est réalisée obliquement vis-à-vis de l'interface (26) entre le fer fondu (25) présents dans la cuve de réacteur (7) et les scories (2') situées au-dessus.

6. Procédé selon une ou plusieurs des revendications 1 à 5, **caractérisé en ce que** l'injection par soufflage d'un agent réducteur (29) contenant du carbone ne dure au maximum que jusqu'à ce que la limite de saturation de carbone dans le fer fondu (25) soit atteinte.

7. Procédé selon une ou plusieurs des revendications 1 à 6, **caractérisé en ce que** l'injection par soufflage de matières auxiliaires (27) et/ou de résidus (27) est réalisée dans une plage de hauteur, des deux côtés de l'interface (26) entre les scories et le fer fondu, qui s'étend sur au maximum 25 % de la hauteur totale des scories respectivement sur une plage de hauteur identique dans le fer fondu (25), de préférence au maximum 10 % de la hauteur totale des scories (2') respectivement de manière symétrique à celle-ci dans le fer fondu (25).

8. Procédé selon l'une des revendications 1 à 7, **caractérisé en ce que** les matériaux (27, 29) à injecter par soufflage sont injectés par soufflage par des ouvertures de sortie latérales (28, 30) de la lance (11) dans une direction à peu près horizontale ou légèrement oblique vis-à-vis de l'interface (26) plane idéalisée.

9. Procédé selon une ou plusieurs des revendications 1 à 8, **caractérisé en ce que** le chauffage par voie électrique est réalisé au moyen d'un arc électrique et/ou d'un chauffage par résistance.

10. Procédé selon une ou plusieurs des revendications 1 à 9, **caractérisé en ce que** les scories (2) sont chargées au moins en partie sous forme liquide.

11. Procédé selon une ou plusieurs des revendications 1 à 10, **caractérisé en ce que** la réduction des oxydes de métal résulte majoritairement d'une réduction directe à l'aide du carbone dissous dans le bain de fusion.

12. Procédé selon une ou plusieurs des revendications 1 à 11, **caractérisé par** une charge d'agents réducteurs plus puissants vis-à-vis du carbone, tels que l'aluminium, le ferrosilicium, le carbure de calcium, etc., de préférence dans la phase finale de la réduction avant une évacuation des scories (2') traitées.

13. Procédé selon une ou plusieurs des revendications 1 à 12, **caractérisé en ce que** des matières auxiliaires (27) destinées au conditionnement des propriétés des scories sont ajoutées une fois que l'apport d'agents réducteurs (29) est terminé.

14. Procédé selon une ou plusieurs des revendications 1 à 13, **caractérisé en ce que** des minerais contenant de l'oxyde de fer, tels que des fines de minerai, des minerais de chromite, sont utilisés en supplément.

15. Procédé selon une ou plusieurs des revendications 1 à 14, **caractérisé en ce que** la hauteur des scories (2') est mesurée et une intervention pour la corriger a lieu en cas de dépassement de la hauteur autorisée maximale et en cas de passage en dessous d'une valeur limite de la hauteur de scories.

16. Procédé selon une ou plusieurs des revendications 1 à 15, **caractérisé en ce que**, après l'introduction de résidus (27) et/ou de matières auxiliaires (27) et/ou d'agents réducteurs (29), et avant l'évacuation des scories (2') traitées, on attend une sédimentation de gouttelettes de métal à partir des scories (2').
